# EUROPÄISCHE PATENTANMELDUNG

(11) **EP 2 241 487 A2**
(43) Veröffentlichungstag der Anmeldung: **20.10.2010**
(21) Anmeldenummer: 10155593.6
(22) Anmeldetag: 05.03.2010
(51) Int. Cl.: B60T 10/02

(54) **Hydrodynamischer Retarder**

(30) Priorität: 15.04.2009 DE 102009002388
(71) Anmelder: ZF Friedrichshafen AG, 88038 Friedrichshafen (DE)
(72) Erfinder: Ulmer, Andreas, 88074, Meckenbeuren (DE)

(57) **Zusammenfassung**

Bei einem hydrodynamischer Retarder (2) mit wenigstens einer Einlassspirale (42) zur Zuführung eines Arbeitsmediums des Retarders (2) in einen Torusraum (40) und/oder mit wenigstens einer Auslassspirale (20) zur Abführung des Arbeitsmediums aus dem Torusraum (40) sind wenigstens zwei Einlassspiralen (42, 44) und/oder wenigstens zwei Auslassspiralen (20, 22) vorgesehen.

## Beschreibung

Die Erfindung betrifft einen hydrodynamischen Retarder nach dem Oberbegriff des Anspruchs 1.

Neben den Betriebsbremsen eines Fahrzeugs, insbesondere eines Nutzfahrzeugs, die im Regelfall einem Verschleiß unterliegende Reibungsbremsen sind, werden zusätzliche Verzögerungseinrichtungen mehr und mehr auch vom Gesetzgeber gefordert und von den Fahrzeugherstellern angeboten.

Derartige verschleißfreie zusätzliche Verzögerungseinrichtungen in Form von Retardern und Motorbremsen können dazu verwendet werden, die Fahrzeuggeschwindigkeit im Gefälle konstant zu halten.

Zu den Retardern werden sowohl zusätzlich am Getriebe angeordnete hydrodynamische, hydrostatische oder elektrodynamische Bremseinrichtungen gezählt, sowie auch Systeme, die in Form eines "Intarders" innerhalb des Getriebegehäuses vorgesehen sind.

Retarder werden bei Nutzfahrzeugen vor allem eingesetzt, um die beispielsweise bei Bremsung aus hoher Fahrgeschwindigkeit anfallende kinetische Bremsenergie aufzunehmen und in Wärme umzusetzen, sind aber auch für geforderte Dauerbremsleistungen gut geeignet, beispielsweise bei lang andauernder Bergabfahrt.

Retarder werden zudem unterschieden einerseits in von der Motordrehzahl abhängige und den Getriebeübersetzungen im Antriebsstrang vorgeschaltete Primärretarder und andererseits in von der Fahrzeuggeschwindigkeit abhängige den Getriebeübersetzungen im Antriebsstrang nachgeschaltete Sekundärretarder.

Bei hydrodynamischen Retardern wird die Strömungsenergie einer Flüssigkeit zum Bremsen benutzt, wobei das physikalische Wirkprinzip dem einer hydrodynamischen Kupplung mit feststehender Turbine entspricht. Demnach weist ein hydrodynamischer Retarder einen sich im Leistungsfluss befindlichen Rotor und einen mit dem Retardergehäuse fest verbundenen Stator auf. Beim Betätigen des Retarders wird eine der gewünschten Bremsleistung entsprechende Ölmenge in den Schaufelraum eingebracht, wobei der drehende Rotor das Öl mitnimmt, das sich am Stator abstützt, wodurch eine Bremswirkung auf die Rotorwelle erzeugt wird.

Zur Befüllung des aus den Schaufeln des Rotors und Stators gebildeten Torusraumes des Retarders ist radial innerhalb des Torusraumes ein innen liegender Raum mit einer spiralförmigen Ausbildung (Einlassspirale) vorgesehen. Unter einer solchen spiralförmigen Ausbildung ist bei der Einlassspirale ein Raum zu verstehen, der auf seinem Kreisumfang in Rotationsrichtung eine abnehmende Querschnittsfläche aufweist, die in Rotationsrichtung von einem Maximum beginnend zu einem Minimum hin kontinuierlich abnimmt.

Zur Entleerung des Torusraums ist am radial äußeren Bereich des Arbeitsraums ein außen liegender Raum mit einer ebenfalls spiralförmigen Ausbildung (Auslassspirale) vorgesehen, wobei unter der Auslassspirale ein Raum zu verstehen ist, der auf seinem Kreisumfang in Rotationsrichtung eine zunehmende Querschnittsfläche aufweist, die in Rotationsrichtung von einem Minimum beginnend zu einem Maximum hin kontinuierlich zunimmt.

Bei der Rotation des Rotors wird das Arbeitmedium des Retarders bei der Entleerung über Öffnungen in die Auslassspirale hin entleert, wobei das Volumen des zu entleerenden Mediums in Rotationsrichtung zunimmt und damit in der Auslassspirale zur Vermeidung von Fluidströmungsproblemen einen sich in Rotationsrichtung kontinuierlich vergrößernden Raum benötigt. Dabei nimmt der Druck in Rotationsrichtung zu. Die Druckverteilung ist somit auf dem Umfang nicht kontinuierlich.

Bei der Befüllung des Torusraums wird hingegen das anfänglich große Volumen in der Einlassspirale in Rotationsrichtung kontinuierlich kleiner, weil entsprechend Arbeitsmedium in den Torusraum abgegeben wird.

Die Ein- und Auslassspiralen können die Strömungs- und Kräfteverhältnisse im Torusraum des Retarders beeinflussen.

Aus der DE 20 18 652 C3 ist ein hydrodynamischer Retarder für Kraftfahrzeuge bekannt geworden, der eine radial außerhalb des Torusraumes des Retarders angeordnete Auslassspirale zur Abführung des Arbeitsmediums aufweist.

Die DE 10 2007 025 676 A1 stellt einen hydrodynamischen Retarder mit einer radial innen liegenden Einlassspirale und einer radial außen liegenden Auslassspirale dar. In der Einlassspirale wird das eingeleitete Fluid in eine Fluidströmung versetzt, die in Umfangsrichtung fließt. Durch einen am Grundkörper des Statorschaufelrades radial innen vorgesehenen, gegenüber der Außenkontur des Statorschaufelrades in Richtung zur Rotorschaufelrad überstehenden Axialvorsprung wird dem Statorschaufelrad eine Strömungsführung zugeordnet, welche der in der Einlassspirale im wesentlichen tangential ankommenden Fluidströmung eine Bewegungskomponente in Radialrichtung überlagert. Fluid, dass den Torusraum verlassen soll, tritt in die Auslassspirale ein und führt hierbei eine Fluidströmung in Umfangsrichtung durch. Das Fluid strömt innerhalb der Auslassspirale im Wesentlichen tangential zum Torusraum.

Um ein ausreichend großes Volumen in den Spiralen zur Verfügung zu stellen, wird ein radialer Bauraum benötigt, der sich insbesondere nach der maximalen radialen Ausdehnung der Querschnittsfläche der Spiralen bestimmt. Insbesondere radialer Bauraum steht aber nicht unbegrenzt zur Verfügung.

Daher liegt der Erfindung die Aufgabe zugrunde, einen hydrodynamischen Retarder aufzuzeigen, der mit einem radial innen liegenden Einlassraum und einem radial außen liegenden Auslassraum versehen eine Verbesserung des Bauraums ermöglicht.

Die Aufgabe wird gelöst durch einen hydrodynamischen Retarder mit den Merkmalen des Anspruchs 1.

Zur Ausbildung der Erfindung ist ein hydrodynamischer Retarder vorgesehen, der entweder wenigstens einen radial innen liegenden Einlassraum und wenigstens einen radial außen liegenden Auslassraum aufweist oder der sowohl mit wenigstens einem radial innen liegenden Einlassraum zur Zuführung eines Arbeitsmediums des Retarders in einen Torusraum und wenigstens einem radial außen liegenden Auslassraum zur Abführung des Arbeitsmediums aus dem Torusraum ausgestattet ist. Erfindungsgemäß sind an diesem Retarder nun wenigstens zwei radial innen liegende Einlassräume und/oder wenigstens zwei radial außen liegende Auslassräume vorgesehen.

Durch die Anordnung mehrerer Räume mit dadurch bedingten mehreren Einlässen und Auslässen in diese Räume bzw. aus diesen Räumen kann die bauliche Größe der einzelnen Räume reduziert werden, wodurch eine kleinere Querschnittsfläche der Räume gewählt werden kann und dennoch in Summe das gleiche Volumen an Arbeitsmedium in den Torusraum und aus dem Torusraum befördert werden kann. Ebenfalls wird die Druckverteilung über den Umfang des Retarders verbessert und bildet dadurch kein Ungleichgewicht. Dies führt zu einer deutlichen Verbesserung der Regelbarkeit des Retarders.

In einer vorteilhaften Ausgestaltung sind die wenigstens zwei radial innen liegenden Einlassräume und/oder die wenigstens zwei radial außen liegenden Auslassräume gleichmäßig auf einem Umfang des Retarders verteilt.

Bei einer besonders vorteilhaften Ausbildungsform sind vier radial innen liegenden Einlassräume und vier radial außen liegenden Auslassräume vorgesehen.

Eine weitere vorteilhafte Ausführung weist alle Räume mit einem gleichbleibenden Querschnitt auf.

Eine weitere besonders vorteilhafte Ausführung zeigt die radial innen liegenden Einlassräume als in Rotationsrichtung mit abnehmendem Querschnitt vorgesehene Einlassspiralen und die radial außen liegenden Auslassräume als in Rotationsrichtung mit zunehmendem Querschnitt vorgesehene Auslassspiralen. Der Querschnitt kann dabei kontinuierlich zunehmend bzw. abnehmend sein, oder er kann zumindest teilweise in Stufen zunehmen bzw. abnehmen. Diese Stufen können in Bereichen des Retarderumfangs auftreten, in denen die Zufuhr bzw. Abfuhr des Arbeitsmediums nicht kontinuierlich ist, beispielsweise weil Teile der Beschaufelung fehlen.

Eine vorteilhafte Ausgestaltung der Einlassräume bzw. Auslassräume weist einen kreisförmigen Querschnitt auf. Andere vorteilhafte Ausgestaltungen der Einlassräume bzw. Auslassräume haben einen vieleckigen Querschnitt.

Die Erfindung wird anhand einer Zeichnung näher beschrieben.

Es zeigen:
- Fig. 1: die schematische Anordnung einer Einlassspirale und Auslassspirale nach dem Stand der Technik
- Fig. 2.: die schematische Anordnung einer Ausführung nach der Erfindung

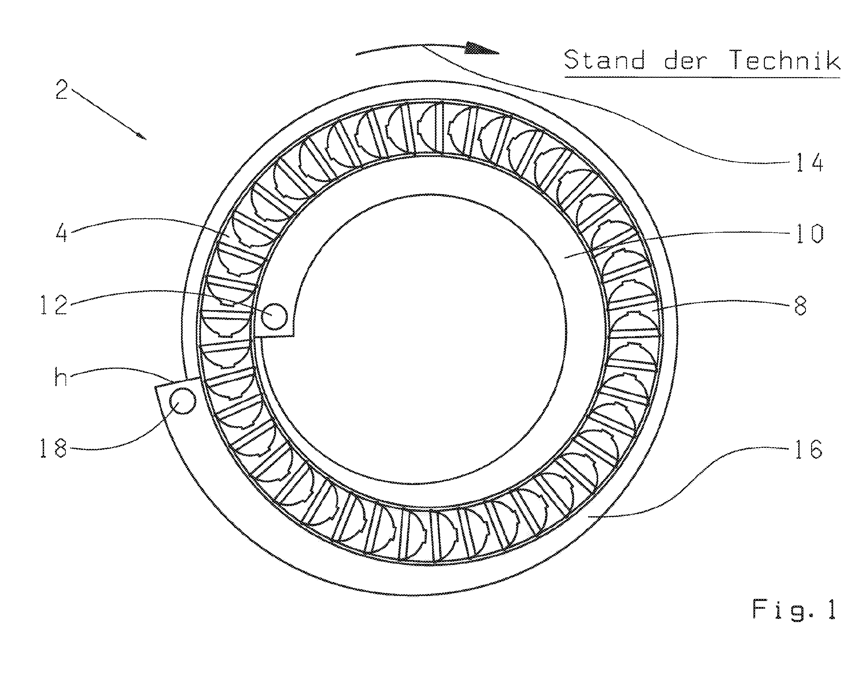

Die Fig. 1 zeigt ein Statorschaufelrad 4 eines hydrodynamischen Retarders 2 mit einer Vielzahl von Statorschaufeln 6. Die Statorschaufeln 6 bilden mit Rotorschaufeln eines hier nicht gezeigten Rotorschaufelrades einen Torusraum 8 des Retarders 2. Radial innerhalb des Torusraumes 8 ist ein Raum zur Befüllung des Torusraumes 8 in Form einer Einlassspirale 10 vorgesehen, die durch eine Zuführöffnung 12 befüllt wird. In der Rotationsrichtung des Rotorschaufelrades, die durch den Pfeil 14 angedeutet ist, wird das Volumen der Einlassspirale 10 kontinuierlich verringert, da das durch die Zuführöffnung 12 einströmende Arbeitsmedium in den Torusraum 8 auf dem gesamten Umfang des Retarders 2 eindringt.

Radial außerhalb des Torusraumes 8 ist ein Raum zur Entleerung des Torusraumes 8 in Form einer Auslassspirale 16 vorgesehen, die durch eine Auslassöffnung 18 entleert wird. In der Rotationsrichtung des Pfeils 14 nimmt das Volumen der Auslassspirale kontinuierlich zu, da das durch die Auslassöffnung 18 ausströmende Arbeitsmedium aus dem Torusraum 8 auf dem gesamten Umfang des Retarders 2 zunehmend in die Auslassspirale 16 eindringt.

Mit h ist die Tiefe der Auslassspirale 16 bezeichnet, die im Bereich der Auslassöffnung 18 am größten ist, während mit I die Tiefe der Einlassspirale bezeichnet ist, die wiederum im Bereich der Zuführöffnung 12 am größten ist.

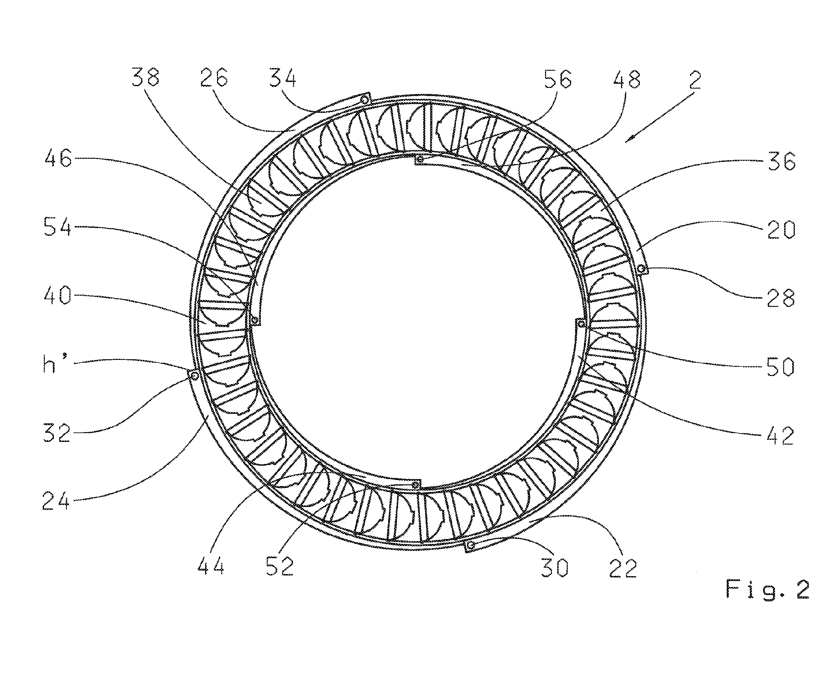

Die Fig. 2 zeigt die erfindungsgemäße Anordnung, bei der auf dem Umfang des Retarders 2 radial außen vier Auslassspiralen 20, 22, 24 und 26 vorgesehen sind, die jeweils Auslassöffnungen 28, 30, 32 und 34 aufweisen, die in einem hier nicht gezeigten Sammelkanal münden können. Auch hier weist der hydrodynamische Retarder 2 ein Statorschaufelrad 36 mit einer Vielzahl von Statorschaufeln 38 auf. Die Statorschaufeln 38 bilden wieder mit Rotorschaufeln eines ebenfalls nicht gezeigten Rotorschaufelrades einen Torusraum 40 des Retarders 2. Radial innerhalb des Torusraumes 40 sind hier vier Räume zur Befüllung des Torusraumes 40 in Form von vier Einlassspiralen 42, 44, 46 und 48 vorgesehen, die durch jeweils eine Zuführöffnung 50, 52, 54 und 56 befüllt wird. Die Zuführöffnungen 50, 52, 54 und 56 können mit einem gemeinsamen, hier nicht gezeigten Ringkanal verbunden sein.

Der Ringkanal einlassseitig und der Sammelkanal auslassseitig können im Retardergehäuse so optimiert angeordnet sein, dass sie im vorhandenen Bauraum untergebracht werden können.

### Bezugszeichenliste

- 2: Retarder
- 4: Statorschaufelrad
- 6: Statorschaufel
- 8: Torusraum
- 10: Einlassspirale
- 12: Zuführöffnung
- 14: Pfeil
- 16: Auslassspirale
- 18: Auslassöffnung
- 20: Auslassspirale
- 22: Auslassspirale
- 24: Auslassspirale
- 26: Auslassspirale
- 28: Auslassöffnung
- 30: Auslassöffnung
- 32: Auslassöffnung
- 34: Auslassöffnung
- 36: Statorschaufelrad
- 38: Statorschaufel
- 40: Torusraum
- 42: Einlassspirale
- 44: Einlassspirale
- 46: Einlassspirale
- 48: Einlassspirale
- 50: Zuführöffnung
- 52: Zuführöffnung
- 54: Zuführöffnung
- 56: Zuführöffnung

## Patentansprüche

1. Hydrodynamischer Retarder (2) mit wenigstens einem radial innen liegenden Einlassraum (42) zur Zuführung eines Arbeitsmediums des Retarders (2) in einen Torusraum (40) und/oder mit wenigstens einem radial außen liegenden Auslassraum (20) zur Abführung des Arbeitsmediums aus dem Torusraum (40), **dadurch gekennzeichnet, dass** wenigstens zwei Einlassräume (42, 44) und/oder wenigstens zwei Auslassräume (20, 22) vorgesehen sind.

2. Hydrodynamischer Retarder (2) nach Anspruch 1, **dadurch gekennzeichnet, dass** die wenigstens zwei Einlassräume (42, 44) und/oder die wenigstens zwei Auslassräume (20, 22) gleichmäßig auf einem Umfang des Retarders (2) verteilt sind.

3. Hydrodynamischer Retarder (2) nach Anspruch 1 oder 2, **dadurch gekennzeichnet, dass** vier Einlassräume (42, 44, 46, 48) und vier Auslassräume (20, 22, 24, 26) vorgesehen sind.

4. Hydrodynamischer Retarder (2) nach einem der Ansprüche 1 bis 3, **dadurch gekennzeichnet, dass** alle Einlassräume (42, 44) und Auslassräume (20, 22) einen gleichbleibenden Querschnitt aufweisen.

5. Hydrodynamischer Retarder (2) nach einem der Ansprüche 1 bis 3, **dadurch gekennzeichnet, dass** die radial innen liegenden Einlassräume als Einlassspiralen (42, 44) mit einem in Rotationsrichtung des Retarders (2) abnehmendem Querschnitt vorgesehen sind und die radial außen liegenden Auslassräume als Auslassspiralen (20, 22) mit einem in Rotationsrichtung des Retarders (2) zunehmendem Querschnitt vorgesehen sind.

6. Hydrodynamischer Retarder (2) nach Anspruch 5, **dadurch gekennzeichnet, dass** der Querschnitt dabei kontinuierlich zunehmend bzw. abnehmend ist.

7. Hydrodynamischer Retarder (2) nach Anspruch 5, **dadurch gekennzeichnet, dass** der Querschnitt zumindest teilweise in Stufen zunimmt bzw. abnimmt.

8. Hydrodynamischer Retarder (2) nach einem der Ansprüche 1 bis 7, **dadurch gekennzeichnet, dass** die Einlassräume (42, 44) bzw. Auslassräume (20, 22) einen kreisförmigen Querschnitt aufweisen.

9. Hydrodynamischer Retarder (2) nach einem der Ansprüche 1 bis 7, **dadurch gekennzeichnet, dass** die Einlassräume (42, 44) bzw. Auslassräume (20, 22) einen vieleckigen Querschnitt aufweisen.
